# EUROPÄISCHE PATENTSCHRIFT

(11) **EP 0 459 023 B1**
(45) Veröffentlichungstag und Bekanntmachung des Hinweises auf die Patenterteilung: **26.01.1994**
(21) Anmeldenummer: 90123261.1
(22) Anmeldetag: 05.12.1990
(51) Int. Cl.: C10J 3/48, C01B 3/22

(54) **Vorrichtung zur Vergasung von kohlenstoffhaltigen Materialien**
Apparatus for gasifying carbon containing materials
Appareil pour gazéifier des matériaux carbonifères

(30) Priorität: 29.05.1990 DE 4017219
(43) Veröffentlichungstag der Anmeldung: 04.12.1991
(73) Patentinhaber: DEUTSCHE BABCOCK ENERGIE- UND UMWELTTECHNIK AKTIENGESELLSCHAFT, 46049 Oberhausen (DE); Noell-DBI Energie- und Entsorgungstechnik GmbH, D-09599 Freiberg (DE)
(72) Erfinder: Förster, Manfred, W-4300 Essen 1 (DE); Kilicaslan, Muharrem, W-4223 Voerde 1 (DE); Peise, Helmut, O-9200 Freiberg (DE); Heinrich, Wolfgang, O-9200 Freiberg (DE); Lucas, Klaus, O-9200 Freiberg (DE); Görz, Jürgen, O-9200 Freiberg (DE)
(74) Vertreter: Müller, Jürgen, Dipl.-Ing.

(56) Entgegenhaltungen:
- EP-A- 0 321 684
- FR-A- 2 273 232
- US-A- 4 343 626

## Beschreibung

Die Erfindung betrifft eine Vorrichtung zur Vergasung von feinkörnigen, flüssigen oder gasförmigen kohlenstoffhaltigen Materialien nach dem Oberbegriff des Patentanspruches 1.

Eine solche Vergasungsanlage ist aus der EP-PS 24 281 bekannt und zeichnet sich durch eine kompakte Bauweise, eine intensive Kühlung und eine hohe Verfügbarkeit aus. Das erzeugte Produktgas enthält Bestandteile, die stark korrosiv auf die üblichen Kesselrohrstähle wirken. Die Korrosionswirkung dieser Bestandteile steigt mit zunehmendem gasseitigen Druck und mit zunehmender Temperatur der Rohrwand. Der Einsatz hochwertiger, korrosionsbeständiger Rohrwerkstoffe wirkt zwar einem vorzeitigen Verschleiß entgegen, verteuert aber andererseits die Anlage. Es sind daher Vorkehrungen zu treffen, um Wartungsarbeiten an dem Vergasungsreaktor und dem Kühler vornehmen zu können. Die in der EP-PS 24 281 beschriebene Anlage läßt solche Vorkehrungen nicht erkennen.

Es ist bekannt, den Vergasungsreaktor und den Kühler einer Vergasungsanlage in getrennten Druckgefäßen anzuordnen und über eine kurze Transferleitung oder eine Flanschverbindung miteinander zu verbinden. Ein bekannter unter Druck betriebener Vergasungsreaktor (DD-PS 145 181) besteht aus einer mehrgängigen Rohrschlange, die in eine feuerfeste Masse eingebettet ist. Dieser Vergasungsreaktor ist als bauliche Einheit herausnehmbar in das Druckgefäß eingesetzt. Der Zwischenraum zwischen dem Vergasungsreaktor und dem Druckgefäß ist von Stickstoff durchströmt, um eine Kondensation von Wasserdampf aus dem Produktgas aufgrund einer Taupunktunterschreitung zu vermeiden.

Aus der DE-OS 34 06 893 ist ein Wärmetauscher für die Kühlung von durch Vergasung hergestelltem Produktgas bekannt. Dieser als Konvektionskühler betriebene Wärmetauscher umfaßt ein Druckgefäß, in dem ein aus gekühlten Rohrwänden bestehender Einsatz abgestützt ist. Innerhalb des Einsatzes sind Heizflächen angeordnet und an dem Druckgefäß herausnehmbar aufgehängt.

Die getrennte Anordnung von Vergasungsreaktor und Kühler erleichtert zwar die Zugänglichkeit und Demontage der einzelnen Aggregate, verteuert aber andererseits die Gesamtanlage. Der Erfindung liegt daher die Aufgabe zugrunde, eine aus Vergasungsreaktor und Kühler bestehende unter Druck betriebene Anlage bei vermindertem apparativen Aufbau wartungsfreundlich zu gestalten.

Diese Aufgabe wird bei einer gattungsgemäßen Vorrichtung erfindungsgemäß durch die kennzeichnenden Merkmale des Patentanspruches 1 gelöst. Vorteilhafte Ausgestaltungen der Erfindung sind in den Unteransprüchen angegeben.

Die erfindungsgemäße Vorrichtung zeichnet sich dadurch aus, daß bei einer einen vergleichsweise geringen apparativen Aufwand verursachenden Anordnung von Vergasungsreaktor und Kühler in einem gemeinsamen Druckgefäß beide Aggregate zur Erleichterung der Wartung getrennt herausnehmbar sind.

Ein Ausführungsbeispiel der Erfindung ist in der Zeichnung dargestellt und wird im folgenden näher erläutert. Es zeigen:

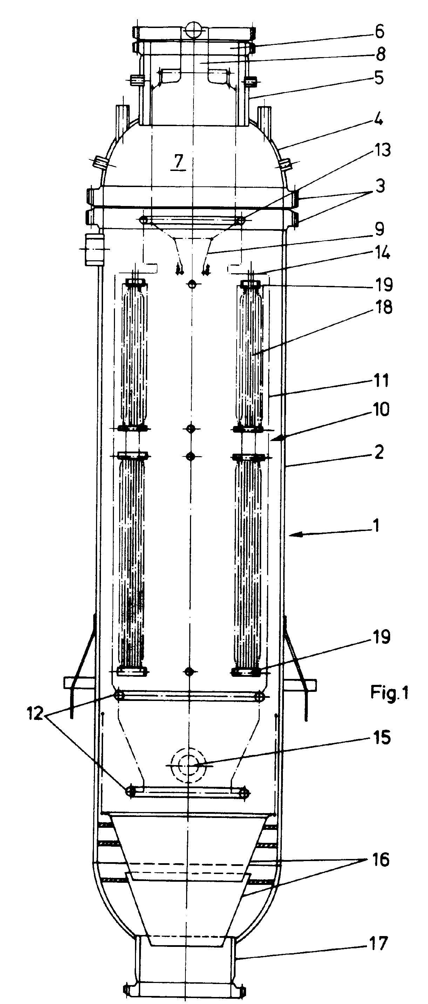

- Fig. 1: den Längsschnitt durch eine aus Vergasungsreaktor und Kühler bestehende Vorrichtung und

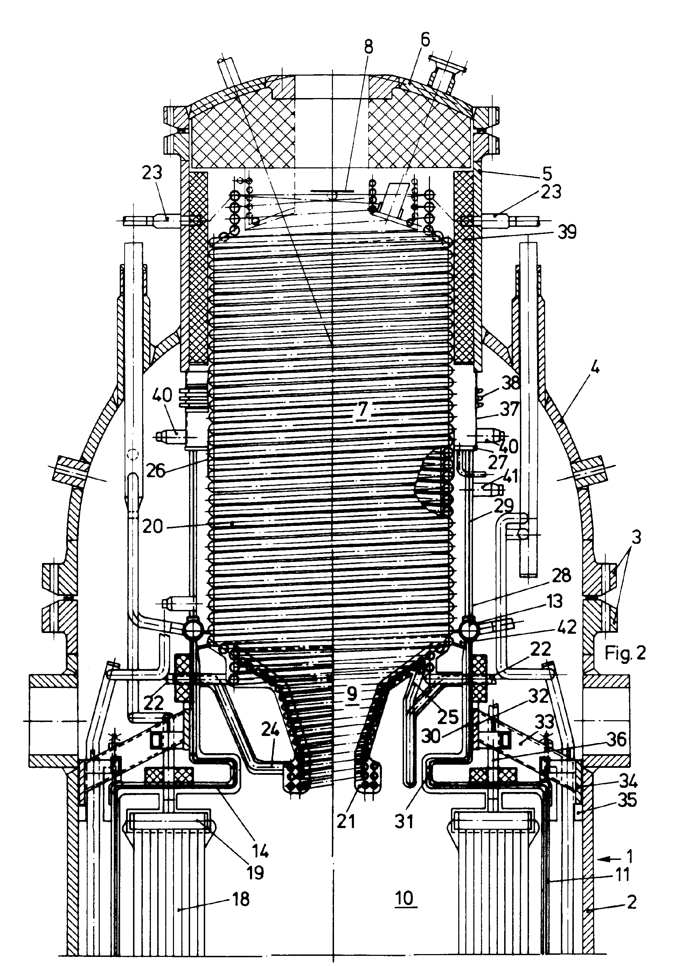

- Fig. 2: den Längsschnitt durch den oberen Teil der Vorrichtung.

Ein auf den Betriebsdruck von etwa 20 bar ausgelegtes Druckgefäß 1 besteht aus einem zylindrischen Mantel 2 und einer mit diesem über eine Flanschverbindung 3 lösbar verbundenen Kuppel 4. Zentral in die Kuppel 4 ist ein die Kuppel 4 überragender Aufsatz 5 eingeschweißt, der durch einen Deckel 6 verschlossen ist.

In den oberen Teil des Druckgefäßes 1 ist ein Vergasungsreaktor 7 eingesetzt. Der Vergasungsreaktor 7 weist einen zylindrischen Querschnitt auf und ist am oberen Ende mit einer Mündung 8 zur Aufnahme eines nicht dargestellten, den Deckel 6 durchdringenden Brenners versehen. Das untere Ende des Vergasungsreaktors 7 ist trichterförmig ausgebildet und bildet einen der Abführung von Produktgas und Schlacke dienenden Austrag 9, der in einen Kühler 10 einmündet.

Der Kühler 10 besteht aus einem mit Abstand von dem Mantel 2 des Druckgefäßes 1 angeordneten, mehreckigen Einsatz 11. Der Einsatz 11 ist aus senkrecht verlaufenden Rohren gebildet, die durch zwischengelegte Stege zu einer gasdichten Rohrwand verbunden sind. Die Rohre der Rohrwand des Einsatzes 11 sind mit Sammlern 12 und einem Ringsammler 13 verbunden und über diese an einen Wasser-Dampf-Kreislauf zur Erzeugung von Dampf angeschlossen. Die Rohre der Rohrwand setzen sich am oberen Ende des Einsatzes 11 in eine ringförmige Decke 14 fort. Der Einsatz 11 ist an dem unteren, im Querschnitt verengten Ende zum Druckgefäß 1 hin offen. An die Wand des Einsatzes 11 ist oberhalb dessen Unterkante ein Gasabführungskanal 15 angeschlossen, der den Mantel 2 des Druckgefäßes 1 durchdringt. Unterhalb des Einsatzes 11 ist zum Schutz des Mantels 2 des Druckgefäßes 1 ein Schlacketrichter 16 angeordnet, der in einen Schlackeabzugsstutzen 17 mündet, der in den Boden des Druckgefäßes 1 eingesetzt ist.

In dem Randbereich des Einsatzes 11 des Kühlers 10 sind schottenartige, ebene Rohrbündel 18 angeordnet, die radial auf die Längsachse des Kühlers 10 weisen. Die Rohrbündel 18 sind mit oberen und unteren Sammlern 19 verbunden. Die Rohrbündel 18 sind an den Wasser-Dampf-Kreislauf des Einsatzes 11 angeschlossen und bevorzugt als Überhitzer geschaltet.

Der Vergasungsreaktor 7 besteht aus einer zylindrischen Rohrwand 20, die auf der Innenseite mit einer feuerfesten Masse 21 ausgekleidet ist. Die Rohrwand 20 ist aus Rohren in Form einer mehrgängigen Spirale gewickelt, die miteinander verbunden sind. Die Rohre sind über einen Zulauf 22 und einen Ablauf 23 an einen Wasserkreislauf angeschlossen. Dabei sind die den trichterförmigen Austrag 9 bildenden Rohre an einen eigenen Kreislauf angeschlossen, der von dem Kreislauf des zylindrischen Teiles der Rohrwand 20 getrennt ist und einen eigenen Zulauf 24 und einen eigenen Ablauf 25 aufweist. Durch diese getrennte Anströmung wird erreicht, daß der untere, einem höheren Verschleiß unterliegende Teil des Vergasungsreaktors 7 abgetrennt und für sich erneuert werden kann.

Etwa in mittlerer Höhe ist die Rohrwand 20 des Vergasungsreaktors 7 auf der Außenseite mit einem Verstärkungsring 26 versehen, der mit einem Tragring 27 verbunden ist. Der Tragring 27 ruht auf einer Stützwand 28 auf, die den Vergasungsreaktor 7 in einem Abstand umgibt. Die Stützwand 28 ist in der nachfolgend beschriebenen Weise auf dem Mantel 2 des Druckgefäßes 1 abgestützt. Die Stützwand 28 kann im oberen Teil 29 aus einem zylindrisch geformten Blechstoß bestehen. Der obere Teil 29 der Stützwand 28 ist auf den Ringsammler 13 aufgesetzt, wobei dessen mittlerer Durchmesser dem Durchmesser der oberen Stützwand 29 entspricht. Die Stützwand 28 setzt sich unterhalb des Ringsammlers 13 als untere Stützwand 30 in eine zylindrische Rohrwand fort, die aus senkrecht angeordneten und über Stege gasdicht verbundenen Rohren gebildet ist. Der Durchmesser dieser unteren Stützwand 30 entspricht wiederum dem mittleren Durchmesser des Ringsammlers 13. Die die untere Stützwand 30 bildende Rohrwand setzt sich über einen gewinkelten Abschnitt 31 in die Decke 14 und das Seitenteil des Einsatzes 11 fort. Damit ist eine durchgehende Rohrwand geschaffen, die die untere Stützwand 30, den abgewinkelten Abschnitt 31 sowie die Decke 14 und die Seitenwand des Einsatzes 11 umfaßt. Die Rohre dieser durchgehenden Rohrwand sind an den Ringsammler 13 angeschlossen und werden von diesem mit Medium versorgt.

Es kann vorteilhaft sein, die obere Stützwand 29 ebenfalls als Rohrwand auszubilden, deren Rohrdurchmesser und Rohrteilung denen der unteren Stützwand 30 entspricht. Die Rohre dieser die obere Stützwand 29 bildenden Rohrwand werden nicht durchströmt. Beide Rohrwände können in einem Arbeitsgang als Zylinder hergestellt werden, der anschließend in einer Radialebene geteilt wird.

Mit der unteren Stützwand 30 ist ein Ring 32 verbunden, an dem schräg nach unten weisende, sternförmig angeordnete Stützen 33 befestigt sind. An dem anderen Ende sind die Stützen 33 ebenfalls mit einem Ring 34 verbunden, der auf einem an der Innenwand des Mantels 2 des Druckgefäßes 1 befestigten Tragring 35 aufruht. An den Stützen 35 sind auch die ebenen Rohrbündel 18 des Kühlers 10 über die Decke 14 durchdringende Tragelemente 36 aufgehängt.

Nach einem Lösen der Zu- und Abführungsleitungen 22 bis 25 kann bei abgenommener Kuppel 5 der Vergasungsreaktor 7 von der Stützwand 28 abgenommen und damit unabhängig von dem Kühler 10 aus dem Druckgefäß 1 herausgenommen werden. Nach dem Herausnehmen des Vergasungsreaktors 7 bleibt die Stützwand 28 mit dem daran hängenden Einsatz 11 und mit den an den Stützen 33 hängenden Rohrbündeln 18 in dem Druckgefäß 1 zurück. Diese Baueinheit kann ebenfalls nach einem Lösen der Zu- und Abführungsleitungen aus dem Druckgefäß 1 herausgezogen werden.

Auf der der Stützwand 28 abgewandten Seite ist der Tragring 27 mit einer zylindrischen Blechwand 37 verbunden, in die ein Kompensator 38 eingesetzt ist. Die Blechwand 37 ist an dem den Vergasungsreaktor 7 im oberen Teil umschließenden Aufsatz 5 befestigt. Zwischen dem Aufsatz 5 und der Rohrwand 20 des Vergasungsreaktors 7 ist eine Schicht 39 aus einer feuerfesten Masse aufgebracht.

Die Blechwand 37 ist mit einem oder mehreren Stutzen 40 zur Zuführung eines Inertgases, vorzugsweise von Stickstoff versehen. Da der Tragring 27 mit der Rohrwand 20 des Vergasungsreaktors 7 und der Blechwand 37 dicht verbunden ist, strömt das unter Druck eingeleitete Inertgas an der Außenseite der Rohrwand 20 des Vergasungsreaktors 7 entlang nach oben. Im Bereich der Mündung 8 des Vergasungsreaktors 7 sind Durchtrittsöffnungen geringen Durchmessers vorgesehen, durch die das eingeblasene Inertgas in den Innenraum des Vergasungsreaktors 7 gelangt, so daß ein stetiger Inertgasstrom entsteht.

In gleicher Weise ist auch die obere Stützwand 29 mit einem oder mehreren Stutzen 41 zur Zuführung von Inertgas in den Zwischenraum zwischen der Rohrwand 20 des Vergasungsreaktors 7 und der oberen Stützwand 29 versehen. Dieser Zwischenraum ist durch einen nicht gasdicht schließenden Stopfen 42 aus feuerfestem Filz zwischen der Rohrwand 20 des Vergasungsreaktors 7 und dem Ringsammler 13 verschlossen. Das unter Druck eingeblasene Inertgas tritt aus dem Zwischenraum durch den Stopfen 42 in den Kühler 10 aus. Das eingeblasene Inertgas dient zum Schutz der Außenseite der Rohrwand 20 des Vergasungsreaktors 7 gegen Korrosion durch Kondenswasser. Daneben kann auch aus dem zeitlichen Verbrauch an Inertgas auf die Unversehrtheit der Rohrwand 20 des Vergasungsreaktors 7 geschlossen werden.

## Patentansprüche

1. Vorrichtung zur Vergasung von feinkörnigen, flüssigen oder gasförmigen Kohlenstoffhaltigen Materialien unter erhöhtem Druck in einem Vergasungsreaktor (7), der eine von einem Kühlmittel durchströmte, auf der Innenseite mit einer feuerfesten Auskleidung (21) versehene Rohrwand (20) aufweist und dessen nach unten gerichteter Austrag (9) in einen Kühler (10) einmündet, der zusammen mit dem Vergasungsreaktor (7) in einem Druckgefäß (1) angeordnet ist, dadurch gekennzeichnet, daß das Druckgefäß (1) aus einem Mantel (2) und einer lösbar mit dem Mantel (2) verbundenen Kuppel (4) besteht, daß die Rohrwand (20) des Vergasungsreaktors (7) in einem Abstand von einer Stützwand (28) umgeben ist daß die Stützwand (28) über Stützen (33) an der Innenwand des Druckgefäßes (1) abgestützt ist und daß der Vergasungsreaktor (7) lösbar und unabhängig von dem Kühler (10) herausnehmbar auf der Stützwand (28) abgestützt ist.

2. Vorrichtung nach Anspruch 1, dadurch gekennzeichnet, daß die Rohrwand (20) des Vergasungsreaktors (7) im mittleren Bereich mit einem Tragring (27) verbunden ist, der auf der Stützwand (28) aufruht.

3. Vorrichtung nach Anspruch 2, dadurch gekennzeichnet, daß zumindest der untere Teil (30) der den Vergasungsreaktor (7) tragenden Stützwand (28) und der den Kühler (10) bildende Einsatz (11) aus Rohren bestehen, die durchgehend von einem Kühlmedium durchströmt und über Stege zu einer gasdichten Rohrwand verbunden sind.

4. Vorrichtung nach Anspruch 2 oder 3, dadurch gekennzeichnet, daß der als durchströmte Rohrwand ausgebildete untere Teil (30) der Stützwand (28) an der Oberkante mit einem Ringsammler (13) verbunden ist, auf den als obere Stützwand (29) eine gleichartige, jedoch nicht durchströmte Rohrwand aufgesetzt ist.

5. Vorrichtung nach einem der Ansprüche 1 bis 4, dadurch gekennzeichnet, daß die Stützwand (28) und eine die Rohrwand (20) des Vergasungsreaktors (7) umschließende Blechwand (37) mit einem oder mehreren Anschlüssen (40, 41) für die Zuführung eines Inertgases in den Zwischenraum zwischen der Stützwand (28) bzw. der Blechwand (37) mit einem oder mehreren Anschlüssen (40, 41) für die Zuführung eines Inertgases in den Zwischenraum zwischen der Stützwand (28) bzw. der Blechwand (37) und der Rohrwand (20) des Vergasungsreaktors (7) versehen sind.

6. Vorrichtung nach Anspruch 5, dadurch gekennzeichnet, daß der Zwischenraum zwischen der Stützwand (28) bzw. der Blechwand (37) und der Rohrwand (20) des Vergasungsreaktors (7) über Durchtrittsöffnungen mit dem Innenraum des Vergasungsreaktors (8) und dem Innenraum des Kühlers (10) verbunden ist.

7. Vorrichtung nach einem der Ansprüche 1 bis 6, dadurch gekennzeichnet, daß die Rohrwand (20) des Vergasungsreaktors (7) zumindest auf einem Teil der Außenseite von einer Schicht (39) aus einer feuerfesten Masse umgeben ist.

8. Vorrichtung nach einem der Ansprüche 1 bis 7, dadurch gekennzeichnet, daß der untere, den Austrag (9) umschließende Teil der Rohrwand (20) des Vergasungsreaktors (7) getrennt von dem übrigen Teil der Rohrwand von einem Kühlmittel angeströmt ist.

## Claims

1. Device for the gasification of finely grained, liquid or gaseous materials, which contain carbon, under increased pressure in a gasification reactor (7), which displays a tube wall (20), which is provided with refractory lining (21) on the inward side and flowed through by a coolant and the downwardly directed discharge outlet (9) of which enters into a cooler (10), which is arranged together with the gasification reactor (7) in a pressure vessel (1), characterised thereby, that the pressure vessel (1) consists of a casing (2) and a dome (4) detachably connected with the casing (2), that the tube wall (20) of the gasification reactor (7) is surrounded at a spacing by a supporting wall (28), that the supporting wall (28) is supported by way of stays at the inside wall of the pressure vessel (1) and that the gasification reactor (7) is detachably supported on the supporting wall (28) to be removable independently of the cooler (10).

2. Device according to claim 1, characterised thereby, that the tube wall (20) of the gasification reactor (7) is connected in the middle region with a carrier ring (27), which rests on the supporting wall (28).

3. Device according to claim 2, characterised thereby, that at least the lower part (30) of the supporting wall (28) carrying the gasification reactor (7) and the insert (11) forming the cooler (10) consist of tubes which are flowed through continuously by a cooling medium and connected by way of webs into a gas-tight tube wall.

4. Device according to claim 2 or 3, characterised thereby, that the lower part (30), constructed as flowed-through tube wall, of the supporting wall (28) is connected at the upper edge with a ring collector (13), onto which a like tube wall, which is however not flowed through,is placed as upper supporting wall (29).

5. Device according to one of the claims 1 to 4, characterised thereby, that the supporting wall (28) and a sheet metal wall (37) enclosing the tube wall (20) of the gasification reactor (7) are provided with one or more connections (40, 41) for the feeding of an inert gas into the intermediate space between the tube wall (20) of the gasification reactor (7) and either the supporting wall (28) or the sheet metal wall (37).

6. Device according to claim 5, characterised thereby, that the intermediate space between the tube wall (20) of the gasification reactor (7) and either the supporting wall (28) or the sheet metal wall (37) is connected by way of passage openings with the interior space of the gasification reactor (7) and the interior space of the cooler (10).

7. Device according to one of the claims 1 to 6, characterised thereby, that the tube wall (20) of the gasification reactor (7) is surrounded by a layer (39) of a refractory mass on at least a part of the outward side.

8. Device according to one of the claims 1 to 7, characterised thereby, that the lower part, which encloses the discharge outlet (9), of the tube wall (20) of the gasification reactor (7) is flowed towards by a coolant separately from the remaining part of the tube wall.

## Revendications

1. Dispositif de gazéification de matériaux à teneur en carbone, se présentant avec une granulométrie fine, sous forme liquide ou gazeuse, la gazéification étant opérée sous haute pression dans un réacteur de gazéification (7), présentant une paroi tubulaire (20) parcourue par un écoulement de fluide de refroidissement, pourvue du côté intérieur d'un revêtement (21) réfractaire, et dont l'évacuation (9), orientée vers le bas, débouche dans un réfrigérant (10), disposé, conjointement avec le réacteur de gazéification (7), dans un récipient à pression (1), caractérisé en ce que le récipient à pression (1) est composé d'une enveloppe (2) et d'une coupole (4), reliée de manière amovible à l'enveloppe (2), en ce que la paroi tubulaire (20) du réacteur de gazéification (7) est entourée à distance par une paroi de protection (28), et en ce que la paroi (28) est soutenue, par des appuis (33), sur la paroi intérieure du récipient à pression (1), et en ce que le réacteur de gazéification (7) est fixé sur la paroi d'appui (28), de façon amovible et permettant une extraction, indépendamment du réfrigérant (10).

2. Dispositif selon la revendication 1, caractérisé en ce que la paroi tubulaire (20) du réacteur de gazéification (7) est reliée dans la zone centrale à un anneau support (27) reposant sur la paroi d'appui (28).

3. Dispositif selon la revendication 2, caractérisé en ce qu'au moins la partie inférieure (30) de la paroi d'appui (28) portant le réacteur de gazéification (7) et l'ensemble (11) formant le réfrigérant (11), sont composés de tubes traversés intérieurement par le flux d'un fluide de refroidissement et sont reliés par des nervures, pour constituer une paroi tubulaire étanche aux gaz.

4. Dispositif selon les revendications 2 ou 3, caractérisé en ce que la partie inférieure (30) de la paroi d'appui (28), réalisée sous forme de paroi tubulaire à écoulement, est reliée par son arête supérieure à un collecteur annulaire (13), sur lequel est posée une paroi tubulaire supérieure (29) de même type, mais non susceptible d'être parcourue par un flux intérieur.

5. Dispositif selon l'une des revendications 1 à 4, caractérisé en ce que la paroi d'appui (28) et une paroi en tôle (37), entourant la paroi tubulaire (20) du réacteur de gazéification (7), sont pourvues d'un ou plusieurs raccordements (40, 41), pour l'arrivée d'un gaz inerte dans l'espace intermédiaire, situé entre la paroi d'appui (28) et la paroi en tôle (37), avec un ou plusieurs raccordements (40, 41), pour l'arrivée d'un gaz inerte dans l'espace intermédiaire situé entre la paroi d'appui (28), la paroi en tôle (37) et la paroi tubulaire (20) du réacteur de gazéification (7).

6. Dispositif selon la revendication 5, caractérisé en ce que l'espace intermédiaire situé entre la paroi d'appui (28), la paroi en tôle (37) et la paroi tubulaire (20) du réacteur de gazéification (7) est relié, par l'intermédiaire d'ouvertures à l'espace intérieur du réacteur de gazéification (8) et à l'espace intérieur du réfrigérant (10).

7. Dispositif selon l'une des revendications 1 à 6, caractérisé en ce que la paroi tubulaire (20) du réacteur de gazéification (7) est entourée, au moins sur une partie de sa surface extérieure, par une couche (39) en matériau réfractaire.

8. Dispositif selon l'une des revendications 1 à 7, caractérisé en ce que la partie inférieure, entourant l'évacuation (9) de la paroi tubulaire (20) du réacteur de gazéification (7) est irriguée par un fluide de refroidissement indépendemment de la partie restante de la paroi tubulaire.
